# FASCICULE DE BREVET EUROPEEN

(11) **EP 2 756 280 B1**
(45) Date de publication et mention de la délivrance du brevet: **11.07.2018**
(21) Numéro de dépôt: 12773017.4
(22) Date de dépôt: 05.09.2012
(51) Int. Cl.: G01M 15/14, B64F 5/00, G05B 23/02

(54) **SYSTÈME DE SURVEILLANCE D'UNE CHAÎNE DE MESURE D'UN TURBORÉACTEUR**
SYSTEM ZUR ÜBERWACHUNG EINER MESSKETTE EINES STRAHLTRIEBWERKS
SYSTEM FOR MONITORING A MEASUREMENT CHAIN OF A TURBOJET ENGINE

(30) Priorité: 15.09.2011 FR 1158211
(43) Date de publication de la demande: 23.07.2014
(73) Titulaire: Safran Aircraft Engines, 75015 Paris (FR)
(72) Inventeur: FOIRET, Guilhem, F-77550 Moissy-Cramayel Cedex (FR)
(74) Mandataire: Ahner, Philippe
(86) Numéro de dépôt international: PCT/FR2012/051984
(87) Numéro de publication internationale: WO 2013/038091

(56) Documents cités:
- EP-A2- 1 106 504

## Description

### DOMAINE TECHNIQUE

La présente invention concerne le domaine de surveillance d'une chaîne de mesure d'un moteur d'aéronef et plus particulièrement, d'un système de surveillance des contacts intermittents de la chaîne de mesure.

### ÉTAT DE LA TECHNIQUE ANTÉRIEURE

En général, une chaîne de mesure comporte deux voies redondées destinées à recueillir au cours du temps des mesures physiques relatives au turboréacteur d'un aéronef. Ces mesures peuvent être des mesures de température, de pression, de régime, de LVDT (Linear Variable Differential Transformer), etc. Chaque voie de mesure comporte une sonde reliée par l'intermédiaire des connecteurs et harnais à un calculateur contrôlant le turboréacteur. Un système de surveillance de l'art antérieure est divulgué dans le document EP1106504. Ainsi, un contact intermittent dû à un retour à la masse intempestif ou à un circuit ouvert de manière intermittente peut apparaître avec le temps au niveau des connecteurs, harnais ou au sein même de la sonde. Les contacts intermittents peuvent être engendrés par des vibrations importantes, et/ou par une faible force de rétention, et/ou par une présence de pollution, et/ou par une corrosion à un point de connexion, etc. Ces contacts intermittents peuvent éventuellement créer selon le type de technologie de la chaîne de mesure et du filtrage utilisé, des défauts de type biais, parasites, ou pics sur le signal de mesure de la chaîne de mesure incriminée.

Actuellement, il n'existe pas de solution pour surveiller les contacts intermittents, mis à part l'exploitation des statuts de panne fournis par la régulation qui a pour fonction de piloter le moteur. Dans le cadre de la présente invention et dans l'ensemble de la description, on entend par « régulation », l'analyse des entrées faite par le calculateur pour vérifier si la mesure est non aberrante. Cette analyse qui est réalisée au niveau logiciel du calculateur comporte des tests de vraisemblance et d'écarts.

Le test de vraisemblance (ou test de zone) est applicable sur toutes les mesures non discrètes. Ce test est basé sur la comparaison d'une entrée à un seuil minimal et un seuil maximal avec élaboration d'un mot de validité indiquant que l'entrée se trouve dans ou hors d'une plage de vraisemblance.

Les tests d'écarts (ou de cross-check) comportent en général trois tests : un premier test d'écart entre les deux voies redondées de la chaîne de mesure, un deuxième test d'écart entre la mesure de la première voie (voie locale) et un modèle correspondant (si tant est qu'un modèle de la mesure est disponible, ce qui n'est pas toujours le cas), et un troisième test d'écart entre la mesure de la deuxième voie (autre voie) et le modèle correspondant. On notera que si aucun modèle de la mesure n'est disponible, on peut faire un test d'écart par rapport à une mesure de référence (par exemple, mesure de pression aéronef). Quand aucun modèle et aucune référence ne sont disponibles, il n'y a que le test d'écart entre voies qui est réalisé.

Lorsque les deux mesures des deux voies sont saines par rapport au test de vraisemblance, le calculateur réalise un test d'écart entre elles. En effet, il est possible que les mesures soient saines d'un point de vue électrique et qu'elles soient incluses dans leur plage de vraisemblance mais qu'elles soient en écart entre elles. Dans ce cas, le calculateur essaie de détecter cet écart car cela signifie que l'une des deux mesures est en panne (voire les deux). Cependant, la détection d'un écart entre les mesures ne permet pas de localiser la mesure en panne. Ainsi, pour localiser le défaut, le calculateur réalise un test d'écart entre la mesure de chaque voie et un modèle correspondant préétabli.

Quand un test de vraisemblance ou d'écart est invalidé, un mot de maintenance est levé, c'est-à-dire que son bit passe à 1. On notera qu'en général, la plupart des mots de maintenance qui n'impactent pas l'opérabilité du moteur ne sont récupérés que pendant les visites (check A) périodiques, ou dans l'éventualité d'une panne nécessitant un dépannage (troubleshooting) du moteur.

En outre, à chaque acquisition d'une mesure, le calculateur détermine un mot de sélection (ou SST, pour Selection STatus) en fonction de la validité des différents tests de vraisemblance et d'écart entre voies ou par rapport au modèle.

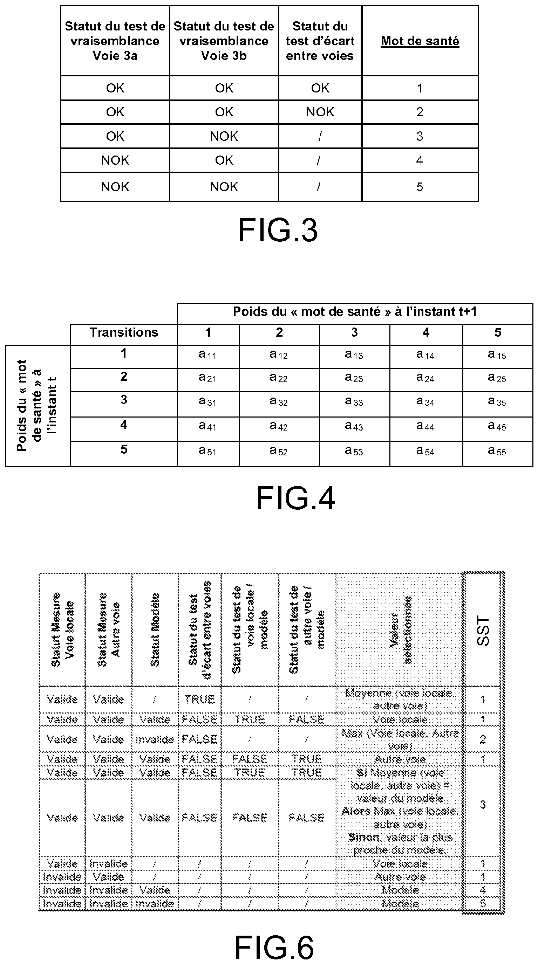

A titre d'exemple, la Fig. 6 est une table de sélection d'une mesure redondée d'un turboréacteur.

Les première et deuxième colonnes représentent les statuts de validité relatifs aux tests de vraisemblance des première et deuxième voies respectivement. La troisième colonne représente le statut du modèle. Les quatrième, cinquième et sixième colonnes représentent les statuts de validité relatifs aux tests d'écarts entre les première et deuxième voies, entre la première voie et le modèle, et entre la deuxième voie et le modèle, respectivement. La septième colonne (grisée) représente la valeur ou la voie sélectionnée par le calculateur et la dernière colonne représente le mot de sélection SST qui indique le statut de la sélection.

Il convient de remarquer que, suivant le moteur considéré, les mots de sélection SST peuvent prendre la même valeur pour des entrées différentes de la table de sélection. On notera que ce cas de figure ne concerne pas tous les turboréacteurs et peut varier selon le motoriste.

Par exemple, dans la première ligne de la table de sélection, tous les tests sont valides, le calculateur prend la moyenne des mesures des deux voies, et le mot de sélection SST est égal à 1. Dans les septième et huitième lignes, le test de vraisemblance sur une des voies est faux, le calculateur sélectionne la voie valide, et le mot de sélection SST vaut également 1. Ainsi, un des tests de vraisemblance ou d'écart entre voies peut être invalide sans que cela ne change la valeur du mot de sélection SST, qui reste alors à sa valeur nominale 1.

Cette non-unicité de la valeur du mot de sélection SST, qui se manifeste dans les cas de panne les moins improbables (test d'écart invalide mais localisation de la voie défaillante possible, ou test de vraisemblance d'une voie invalide mais assurance de la santé de l'autre voie), ne permet pas de donner des renseignements précis sur la chaîne de mesure.

Par ailleurs, on notera que les seuils d'écarts sont dimensionnés de manière à ne pas dégrader la poussée et la pilotabilité du moteur et surtout de ne pas déclencher de fausses alarmes.

En particulier, les tests de vraisemblance ont pour bornes celles de la gamme de mesure du capteur, élargie de la précision de la chaîne de mesure complète et augmentée d'un seuil de sécurité.

En ce qui concerne le test d'écart, la valeur du seuil est généralement calculée en prenant deux fois et demie la pleine échelle de précision de la chaîne de mesure. Pour rester robuste, ce test est donc volontairement large et permet une grande dérive de la mesure avant que son statut ne soit déclaré invalide.

Ainsi, les tests de diagnostic fournis par la régulation ne permettent pas de surveiller de manière pertinente les phénomènes intermittents de la chaîne de mesure.

L'objet de la présente invention est de proposer un système de surveillance des contacts intermittents et du bruit sur une chaîne de mesure d'un turboréacteur afin de détecter ou pronostiquer une dégradation pouvant conduire à une panne.

### EXPOSÉ DE L'INVENTION

La présente invention est définie par un système de surveillance d'une chaîne de mesure destinée à recueillir au cours du temps des mesures relatives à un turboréacteur d'aéronef, ledit système comportant des moyens de traitement configurés pour construire un indicateur de santé de ladite chaîne de mesure basé sur un comptage de transitions entre des mots de santé successifs définissant un score de validité des mesures successives correspondantes.

Ceci permet d'observer des phénomènes intermittents et évolutifs afin de pronostiquer une panne à une échéance plus ou moins longue.

Selon un premier mode de réalisation, le système comporte des moyens d'acquisition pour acquérir au cours du temps lesdites mesures recueillies par la chaîne de mesure, et les moyens de traitement sont configurés pour construire lesdits mots de santé en utilisant seulement des tests de vraisemblance et d'écart étant définis selon des seuils de paramétrage sélectionnées spécifiquement de manière étroite pour la surveillance des contacts intermittents de la chaîne de mesure. Ceci augmente la flexibilité du système de surveillance et permet de construire des mots de santé génériques pour toutes les mesures tout en optimisant la surveillance des phénomènes intermittents.

Avantageusement, les moyens de traitement sont configurés pour changer les valeurs des seuils de paramétrage en fonction de l'observable mesuré par la chaîne de mesure.

Ainsi, les valeurs des seuils peuvent être modifiées et resserrées pour être pertinentes par rapport à l'information recherchée.

Selon un deuxième mode de réalisation, le système comporte des moyens d'acquisition pour récupérer lesdits mots de santé depuis un calculateur relié à ladite chaîne de mesure, lesdits mots de santé correspondant à des mots de sélection (SST) déjà calculés par ledit calculateur en fonction de la validité des tests de vraisemblance, d'écart entre voies redondées de ladite chaîne de mesure, et d'écarts par rapport à un modèle desdites voies. Ceci permet de diminuer la charge de calcul.

Selon un troisième mode de réalisation, le système comporte des moyens d'acquisition pour récupérer les mots de santé depuis un calculateur relié à ladite chaîne de mesure, lesdits mots de santé correspondant à des mots de maintenance préalablement déterminés par ledit calculateur à partir des tests invalidés de vraisemblance ou d'écarts. Ceci permet également de diminuer la charge de calcul tout en étant applicable à toutes les cibles.

Avantageusement, les moyens de traitement sont configurés pour calculer un indicateur de variance pour chaque voie redondée comprise dans ladite chaîne de mesure. Ceci permet de donner une information sur la santé de chaque voie redondée de la chaîne de mesure.

Avantageusement, les moyens de traitement sont configurés pour analyser l'évolution des indicateurs de santé de vol en vol afin de détecter des contacts intermittents sur ladite chaîne de mesure.

Avantageusement, au cas où des contacts intermittents sont détectés, les moyens de traitement sont configurés pour analyser l'évolution des indicateurs de variance de vol en vol afin de localiser la voie défaillante.

L'invention vise également un turboréacteur d'aéronef comprenant au moins une chaîne de mesure et un système de surveillance selon l'une quelconque des caractéristiques précédentes.

L'invention vise aussi un procédé de surveillance d'une chaîne de mesure destinée à recueillir au cours du temps des mesures relatives à un turboréacteur d'aéronef, ledit procédé comportant l'étape de construire un indicateur de santé de ladite chaîne de mesure basé sur un comptage de transitions entre des mots de santé successifs définissant un score de validité des mesures successives correspondantes.

### BRÈVE DESCRIPTION DES DESSINS

La Fig. 1 illustre de manière schématique un système de surveillance d'une chaîne de mesure d'un turboréacteur d'aéronef, selon l'invention ;
La Fig. 2 est un schéma-bloc illustrant le procédé de surveillance d'une chaîne de mesure d'un turboréacteur d'aéronef, selon un mode de réalisation préféré de l'invention ;
La Fig. 3 est une table de configuration montrant la construction des mots de santé selon le mode de réalisation préféré de l'invention ;
La Fig. 4 illustre une table de construction de l'indicateur de santé, selon l'invention ; La figure 5B illustre un schéma-bloc du procédé de surveillance d'une chaîne de mesure d'un turboréacteur d'aéronef, selon un autre mode de réalisation de l'invention ; et
La Fig. 6 est une table de sélection montrant la construction d'un mot de sélection pour une mesure redondée d'un turboréacteur.

### EXPOSÉ DÉTAILLÉ DE MODES DE RÉALISATION PARTICULIERS

L'idée à la base de l'invention consiste à extraire un indicateur de santé de la chaîne de mesure d'un turboréacteur afin d'observer des phénomènes intermittents et évolutifs spécifiques à la chaîne de mesure.

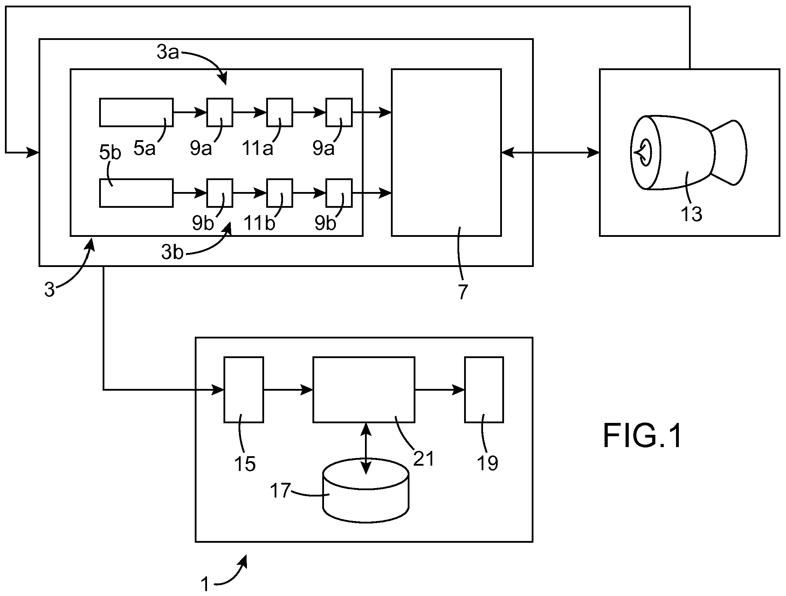

La Fig. 1 illustre de manière schématique un système de surveillance d'une chaîne de mesure d'un moteur ou turboréacteur d'aéronef, selon l'invention.

La chaîne de mesure 3 illustrée comporte deux voies redondées 3a, 3b destinées à recueillir au cours du temps des mesures physiques relatives au turboréacteur. Ces mesures peuvent correspondre à un paramètre ou observable parmi les observables suivants : températures, pressions, régimes, LVDT, etc.

La première voie 3a comporte une première sonde (ou capteur) 5a reliée à un calculateur 7 par l'intermédiaire d'une première série de connecteurs 9a et de harnais 11a. La deuxième voie 3b comporte une deuxième sonde 5b reliée au calculateur 7 par l'intermédiaire d'une deuxième série de connecteurs 9b et de harnais 11b. Le calculateur 7 (par exemple, un FADEC) est destiné à exploiter les mesures fournies par les chaînes de mesure pour contrôler le moteur ou turboréacteur 13.

Le système de surveillance 1 comporte des moyens d'acquisition 15 pour acquérir des données concernant le turboréacteur 13 depuis la chaîne de mesure 3 et/ou le calculateur 7, des moyens de stockage 17, des moyens de sortie 19, et des moyens de traitement 21 de l'information pour l'exécution d'un ou de plusieurs programmes d'ordinateur comprenant des instructions de code de programme, stockés dans les moyens de stockage 17 et conçus pour mettre en oeuvre la surveillance d'une chaîne 3 de mesure.

Conformément à l'invention les moyens de traitement 21 sont configurés pour construire un indicateur de santé de la chaîne 3 de mesure basé sur un comptage de transitions entre des mots de santé successifs définissant un score (ou un poids) de validité des mesures successives correspondantes.

Plus particulièrement, l'indicateur de santé correspond à une matrice comprenant les proportions d'occurrence des transitions des mots de santé successifs pendant le vol.

Les indicateurs de santé au cours des différents vols peuvent être enregistrés dans une base de données stockée par exemple dans les moyens de stockage 17 pour être par la suite recompilées dans une optique d'analyse de tendance (trending, en anglais) afin de prévoir un cas de panne de la chaîne 3 de mesure et de localiser l'équipement responsable de la mesure erronée.

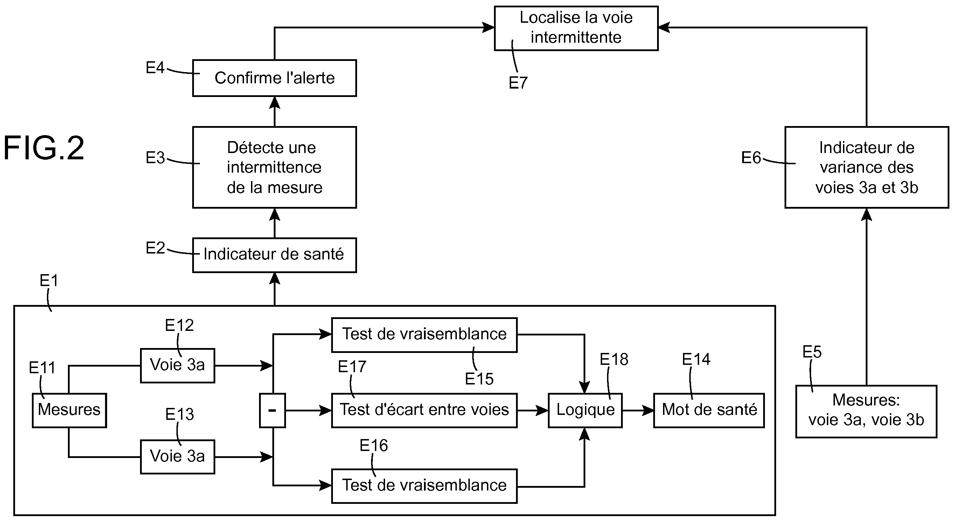

La Fig. 2 est un schéma-bloc illustrant le procédé de surveillance d'une chaîne de mesure d'un turboréacteur d'aéronef, selon un mode de réalisation préféré de l'invention.

Au bloc E1, les moyens d'acquisition 21 sont configurés pour acquérir au cours du temps les mesures (bloc E11) recueillies par les voies redondées 3a, 3b de la chaîne 3 de mesure (blocs E12, E13). En outre, les moyens de traitement 21 sont configurés pour construire les mots de santé (bloc E14) en utilisant des tests de vraisemblance (blocs E15, E16) et d'écart entre les voies redondées (bloc E17) de la chaîne 3 de mesure selon une logique (bloc E18) pouvant être exprimée par une table de configuration particulière illustrée sur la Fig. 3.

Les première et deuxième colonnes de la table illustrée sur la Fig. 3 représentent les statuts de validité relatifs aux tests de vraisemblance de la première voie 3a et de la deuxième voie 3b respectivement. La troisième colonne représente le statut de validité relatif au test d'écart entre les voies 3a et 3b. La quatrième colonne représente le mot de santé défini par un nombre entier choisi parmi cinq nombres. Par exemple, lorsque tous les tests sont valides, le mot de santé est égal à 1. En revanche, lorsque les deux tests de vraisemblance sont invalides, le mot de santé est égal à 5.

Ainsi, contrairement à la régulation, seuls les tests de vraisemblance E15, E16 des deux voies 3a, 3b et le test d'écart E17 entre les voies 3a et 3b sont utilisés pour construire les mots de santé. La comparaison avec un éventuel modèle ou mesure extérieure n'est pas pertinente dans la surveillance des contacts intermittents.

Ceci permet de construire la table de configuration des mots de santé de manière simple et générique pour toutes les mesures, contrairement aux tables de sélection de la régulation qui sont spécifiques à chaque observable ou type de mesure et qui comportent plus d'entrées (voir Fig. 6).

En outre, les tests de vraisemblance E15, E16 et d'écart E17 sont définis selon des seuils de paramétrage sélectionnés spécifiquement pour la surveillance de la chaîne 3 de mesure. La grille de seuils de paramétrage selon l'invention est un triplet constitué d'un seuil inférieur du test de vraisemblance, d'un seuil supérieur du test de vraisemblance, et d'un seuil du test d'écart. Cette grille peut être créée de manière resserrée jusqu'à atteindre la variance naturelle de l'écart entre les voies. Ainsi, ces seuils sont sélectionnés de manière plus étroite que ceux fixés pour la régulation.

En effet, en observant sur un vol l'évolution d'une mesure en phase stabilisée, on remarque que l'écart entre voies est environ deux ordres de grandeur plus faibles que le seuil du test d'écart de la régulation. De forts transitoires créent des écarts très ponctuels plus importants, mais ces derniers restent un ordre de grandeur plus faible que le seuil d'écart fixé par la régulation. Ainsi, les seuils fixés pour la régulation (en particulier pour le test d'écart entre les voies) sont très larges dans une optique de robustesse.

La surveillance des contacts intermittents de la chaîne 3 de mesure n'ayant pas les mêmes objectifs ni les mêmes contraintes que la régulation, ces seuils sont avantageusement resserrés pour être plus pertinents par rapport à l'information recherchée.

Avantageusement, les moyens de traitement 21 sont configurés pour changer les valeurs des seuils de paramétrage en fonction de l'observable mesuré par la chaîne 3 de mesure.

En outre, on peut associer à chaque observable, plusieurs grilles de paramétrage. En effet, on peut sélectionner pour le seuil de test d'écart, une valeur quelconque comprise dans un intervalle partant du bruit naturel de la mesure jusqu'au seuil de la régulation.

Au bloc E2, les moyens de traitement 21 extraient l'indicateur de santé de la chaîne 3 de mesure à partir des mots de santé créés durant le vol au bloc E1.

La Fig. 4 illustre une table de construction de l'indicateur de santé. Ce dernier est une matrice « de comptage » carrée d'ordre 5 dont les coefficients correspondent aux nombres de transitions entre des mots de santé successifs créés lors du vol.

Plus particulièrement, les lignes (i=1 à i= 5) représentent les poids (1 à 5 respectivement) des mots de santé à un instant t et les colonnes (j=1 à j= 5) représentent les poids (1 à 5 respectivement) des mots de santé à l'instant suivant t+1. Ainsi, chaque coefficient aᵢⱼ est un compteur indiquant le nombre de transitions successives entre un mot de santé de poids i et un mot de santé de poids j pendant le vol.

Au début du vol, la matrice de comptage est vide (c'est-à-dire, matrice nulle) et au fur et à mesure, (c'est-à-dire, à chaque instant t), on incrémente le compteur du coefficient correspondant. L'incrémentation dépend de l'observable mesuré car tous les observables ne sont pas mesurés à la même fréquence.

Par exemple, dans le cas d'une chaîne 3 de mesure saine, on n'aura durant tout le vol que des transitions d'un mot de santé de valeur 1 vers un mot de santé de valeur 1. Ceci forme une matrice dont tous les coefficients sont nuls sauf le coefficient a₁₁ qui sera égal à la durée du vol multipliée par la fréquence d'acquisition de la mesure. On notera par ailleurs, que pour un observable donné (température, pression, régime, etc.), on peut construire plusieurs matrices de comptage : une matrice pour chaque grille de paramétrage.

L'indicateur de santé peut être facilement transmis au sol via les moyens de sortie 19. On notera que la matrice de comptage est relativement petite (par exemple, 5x5), ce qui réduit le coût de transmission des messages comprenant les indicateurs de santé de différents observables.

Au bloc E3, les moyens de traitement 21 sont configurés pour analyser l'évolution des indicateurs de santé de vol en vol afin de détecter des contacts intermittents sur la chaîne 3 de mesure.

En effet, chaque indicateur de santé extrait durant chaque vol courant peut être enregistré dans les moyens de stockage 17. Ceci permet de surveiller en tendance l'évolution de la mesure sachant qu'un phénomène intermittent génère de vol en vol une signature particulière de dégradation qui permet de pronostiquer une panne à une échéance plus ou moins longue.

Au bloc E4, si le pronostic d'une dégradation se confirme sur plusieurs vols, une alerte est alors déclenchée. Ceci évite l'émission de fausses alertes.

On notera que dans le cas où seul le test d'écart est invalide, le seul indicateur de santé extrait au bloc E3 ne permet pas de localiser la voie défaillante.

Ainsi, au bloc E6, les moyens de traitement 21 sont configurés pour calculer à partir des mesures (bloc 5), un indicateur supplémentaire de variance pour chaque voie 3a, 3b redondée de la chaîne 3 de mesure. L'indicateur de variance peut correspondre à une valeur maximale d'un écart-type sur le vol courant, ou une valeur prise par un écart-type glissant lors d'une transition d'un mot de santé.

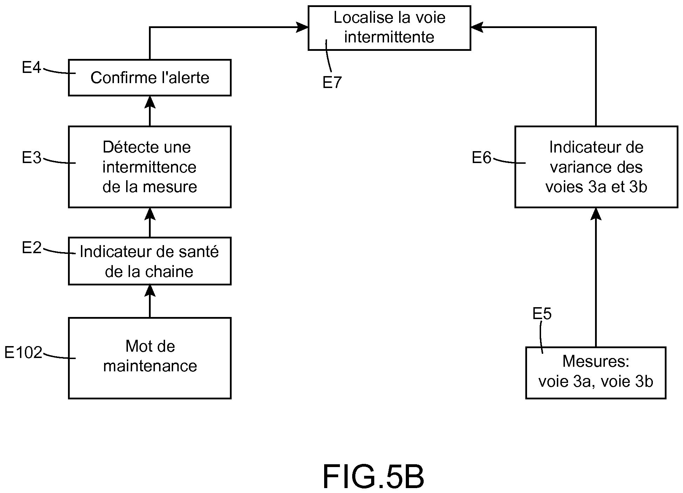

Au cas où des contacts intermittents sont détectés (bloc E4), les moyens de traitement 21 sont configurés pour analyser l'évolution des indicateurs de variance de vol en vol afin de localiser la voie défaillante (bloc E7). En particulier, les informations issues des blocs E4 et E5 sont analysées au bloc E7 pour déterminer la voie défaillante. En effet, une voie présentant une grande variance (c'est-à-dire, une voie très variante ou très bruitée) confirme un problème de contact intermittent au niveau de cette voie. La figure 5B illustre un schémas-blocs du procédé de surveillance d'une chaîne de mesure d'un turboréacteur d'aéronef, selon un deuxième mode de réalisation de l'invention. Le deuxième mode de réalisation de la Figure 5B ne se distingue de celui de la Fig. 2 que par la nature et la provenance des mots de santé.

Dans le mode de réalisation de la Fig. 5B, tous les blocs sont aussi identiques à ceux de la Fig. 2 sauf pour le bloc E1 qui est remplacé par le bloc E102.

Au bloc E102, les moyens d'acquisition 15 sont configurés pour récupérer les mots de santé depuis le calculateur 7 relié à la chaîne 3 de mesure. Selon ce troisième mode de réalisation, les mots de santé correspondent à des mots de maintenance préalablement déterminés par le calculateur 7 à partir des tests de vraisemblance ou d'écarts qui peuvent être valides ou non valides. Le mode de réalisation de la Figure 5B permet de réduire le temps de calcul sachant que les mots de santé sont déjà réalisés par la régulation. Mais ce gain en temps de calcul est au détriment d'une perte en précision car ces mots de santé sont issus des tests présentant des seuils moins resserrés.

Ainsi, le choix entre les trois modes de réalisation peut se faire en fonction des données disponibles et des contraintes de précision, de temps de calcul ou de coûts de transmissions.

## Revendications

1. Système de surveillance d'une chaîne (3) de mesure destinée à recueillir au cours du temps des mesures relatives à un turboréacteur (13) d'aéronef, comportant :
- des moyens de traitement (21) configurés pour construire un indicateur de santé de ladite chaîne de mesure basé sur un comptage de transitions entre des mots de santé successifs définissant un score de validité des mesures successives correspondantes, et
- des moyens d'acquisition (15) pour acquérir au cours du temps lesdites mesures recueillies par la chaîne (3) de mesure,
et **caractérisé en ce que** les moyens de traitement (21) sont configurés pour construire lesdits mots de santé en utilisant seulement des tests de vraisemblance et d'écart entre voies redondées de ladite chaîne (3) de mesure, lesdits tests de vraisemblance et d'écart étant définis selon des seuils de paramétrage sélectionnés spécifiquement de manière étroite pour la surveillance des contacts intermittents de la chaîne de mesure.

2. Système selon la revendication 1, **caractérisé en ce que** les moyens de traitement (21) sont configurés pour changer les valeurs des seuils de paramétrage en fonction de l'observable mesuré par la chaîne de mesure.

3. Système selon l'une quelconque des revendications précédentes, **caractérisé en ce que** les moyens de traitement (21) sont configurés pour calculer un indicateur de variance pour chaque voie redondée comprise dans ladite chaîne de mesure.

4. Système selon l'une quelconque des revendications précédentes, **caractérisé en ce que** les moyens de traitement (21) sont configurés pour analyser l'évolution des indicateurs de santé de vol en vol afin de détecter des contacts intermittents sur ladite chaîne de mesure.

5. Système selon la revendication 4, **caractérisé en ce qu'**au cas où des contacts intermittents sont détectés, les moyens de traitement (21) sont configurés pour analyser l'évolution des indicateurs de variance de vol en vol afin de localiser la voie défaillante.

6. Turboréacteur d'aéronef comprenant au moins une chaîne de mesure et un système de surveillance selon l'une quelconque des revendications précédentes.

7. Procédé de surveillance d'une chaîne (3) de mesure destinée à recueillir au cours du temps des mesures relatives à un turboréacteur (13) d'aéronef, ledit procédé comporte l'étape de construire un indicateur de santé de ladite chaîne de mesure basé sur un comptage de transitions entre des mots de santé successifs définissant un score de validité des mesures successives correspondantes, et **caractérisé en ce que** ledit procédé comporte l'étape de construire lesdits mots de santé en utilisant seulement des tests de vraisemblance et d'écart entre voies redondées de ladite chaîne (3) de mesure, lesdits tests de vraisemblance et d'écart étant définis selon des seuils de paramétrage sélectionnées spécifiquement de manière étroite pour la surveillance des contacts intermittents de la chaîne de mesure.

## Patentansprüche

1. System zur Überwachung eines Messstrangs (3), welcher dazu bestimmt ist, im Laufe der Zeit Messungen bezüglich eines Turbostrahltriebwerks (13) eines Luftfahrzeugs zu sammeln, umfassend:
- Verarbeitungsmittel (21), die dazu ausgelegt sind, einen Indikator für die Gesundheit des Messstrangs, basierend auf einer Zählung von Übergängen zwischen aufeinanderfolgenden Gesundheitswörtern, welche ein Gültigkeitsergebnis der entsprechenden aufeinanderfolgenden Messungen definieren, zu erstellen, und
- Erfassungsmittel (15), um im Laufe der Zeit die durch den Messstrang (3) gesammelten Messungen zu erfassen,
und **dadurch gekennzeichnet, dass** die Verarbeitungsmittel (21) dazu ausgelegt sind, die Gesundheitswörter unter Verwendung lediglich von Wahrscheinlichkeits- und Abweichungstests zwischen eine Redundanz bildenden Wegen des Messstrangs (3) zu bilden, wobei die Wahrscheinlichkeits- und Abweichungstests entsprechend Parametrierschwellen, die speziell für die Überwachung der intermittierenden Kontakte des Messstrangs eng ausgewählt sind, definiert sind.

2. System nach Anspruch 1, **dadurch gekennzeichnet, dass** die Verarbeitungsmittel (21) dazu ausgelegt sind, die Werte der Parametrierschwellen in Abhängigkeit von der durch den Messstrang gemessenen Beobachtbaren zu ändern.

3. System nach einem der vorhergehenden Ansprüche, **dadurch gekennzeichnet, dass** die Verarbeitungsmittel (21) dazu ausgelegt sind, einen Varianzindikator für jeden eine Redundanz bildenden Weg, der in dem Messstrang enthalten ist, zu berechnen.

4. System nach einem der vorhergehenden Ansprüche, **dadurch gekennzeichnet, dass** die Verarbeitungsmittel (21) dazu ausgelegt sind, die Entwicklung der Gesundheitsindikatoren von Flug zu Flug zu analysieren, um intermittierende Kontakte an dem Messstrang zu erkennen.

5. System nach Anspruch 4, **dadurch gekennzeichnet, dass** in dem Fall, in dem intermittierende Kontakte erkannt werden, die Verarbeitungsmittel (21) dazu ausgelegt sind, die Entwicklung der Varianzindikatoren von Flug zu Flug zu analysieren, um den Weg, der ausgefallen ist, ausfindig zu machen.

6. Turbostrahltriebwerk eines Luftfahrzeugs, umfassend wenigstens einen Messstrang und ein Überwachungssystem nach einem der vorhergehenden Ansprüche.

7. Verfahren zur Überwachung eines Messstrangs (3), welcher dazu bestimmt ist, im Laufe der Zeit Messungen bezüglich eines Turbostrahltriebwerks (13) eines Luftfahrzeugs zu sammeln, wobei das Verfahren den Schritt umfasst, einen Gesundheitsindikator des Messstrangs basierend auf einer Zählung von Übergängen zwischen aufeinanderfolgenden Gesundheitswörtern, die ein Gültigkeitsergebnis der entsprechenden aufeinanderfolgenden Messungen definieren, zu erstellen, und **dadurch gekennzeichnet, dass** das Verfahren den Schritt umfasst, die Gesundheitswörter unter Verwendung lediglich von Wahrscheinlichkeits- und Abweichungstests zwischen eine Redundanz bildenden Wegen des Messstrangs (3) zu bilden, wobei die Wahrscheinlichkeits- und Abweichungstests entsprechend Parametrierschwellen, die speziell für die Überwachung der intermittierenden Kontakte des Messstrangs eng ausgewählt sind, definiert sind.

## Claims

1. A system for monitoring a measuring chain (3) arranged to collect over time measures relating to an aircraft turbojet engine (13), comprising:
- processing means (21) configured to build a health indicator of said measuring chain based on counting transitions between successive health words defining a validity score for the corresponding successive measures, and
- acquisition means (15) for acquiring over time said measures collected by the measuring chain (3),
**characterised in that** the processing means (21) are configured to build said health words by using only likelihood and deviation tests between the redundant paths of said measuring chain (3), said likelihood and deviation tests being defined according to paramatering thresholds specifically selected narrowly for monitoring intermittent contacts of the measuring chain.

2. The system according to claim 1, **characterised in that** the processing means (21) are configured to change the values of parametering thresholds as a function of the observable measured by the measuring chain.

3. The system according to any of the preceding claims, **characterised in that** the processing means (21) are configured to compute a variance indicator for each redundant path included in said measuring chain.

4. The system according to any of the preceding claims, **characterised in that** the processing means (21) are configured to analyse the in-flight evolution of the flight health indicators in order to detect intermittent contacts of said measuring chain.

5. The system according to claim 4, **characterised in that** in case intermittent contacts are detected, the processing means (21) are configured to analyse the in-flight evolution of the flight variance indicators in order to locate the failure path.

6. An aircraft turbojet engine comprising at least one measuring chain and one monitoring system according to any of the preceding claims.

7. A method for monitoring a measuring chain (3) arranged to collect over time measures relating to an aircraft turbojet engine (13), said method includes the step of building a health indicator of said measuring chain based on counting transitions between successive health words defining a validity score of the corresponding successive measures, **characterised in that** said method comprises the step of building said heath words by using only likelihood and deviation tests between the redundant paths of said measuring chain (3), said likelihood and deviation tests being defined according to paramatering thresholds specifically selected narrowly for monitoring intermittent contacts of the measuring chain.
